# EUROPEAN PATENT APPLICATION

(11) **EP 3 081 430 A1**
(43) Date of publication of application: **19.10.2016**
(21) Application number: 16460022.3
(22) Date of filing: 12.04.2016
(51) Int. Cl.: B60N 3/04, A47G 27/02

(54) **CAR MAT**

(30) Priority: 14.04.2015 PL 41198815
(71) Applicant: Steffens, Markus, 21029 Hamburg (DE)
(72) Inventor: Steffens, Markus, 21029 Hamburg (DE)
(74) Representative: Czabajski, Jacek

(57) **Abstract**

A car mat in the form of a three-layered structure, where the top layer (1) is a semi-rigid plate with water inlet holes (6). The respective layers (1,2,3) of the three-layered structure are combined into one set, whose outside shape corresponds to the shape of a car mat. The interlayer (2) is a semi-rigid outlet structure, whereas the bottom layer (3) is a semi-rigid plate.

## Description

The object of the invention is a car mat for application as a carpet on the car floor. This kind of carpet is used in cars for passengers, in order to protect the floor covering inside the car against damage and against water brought into the car on the passengers' shoes. The carpet has a shape that is adjusted to the shape of the car floor at the disposal of each passenger. The invention is a rigid mat for the same application, with a shape close to the car carpet. In particular, this kind of mat is aimed for drivers and passengers of all-terrain, sports and competition cars.

There is a series of known solutions of a car mat for listed applications. Known mats applied to this end are layered structures.

The known solution was presented in the patent description of the European invention with the publication number EP 2314443 concerning the method of production of non-slip surface in the structure of car body. This kind of non-slip surface is important in numerous elements of a vehicle, for example in fire-fighting vehicles. This solution presents a multi-layer structure, composed of the top metal perforated plate with a series of through holes, an interlayer from thermoplastic material and the rigid bottom plate, for example pressed or cast from aluminium. Structural elements of car body. The top perforated plate is welded thermally with the bottom rigid plate, with the interlayer from thermoplastic material that separates them. In the known solution the main required function is the non-slip function and for this reason, the edges of perforation holes are turned outside, thus forming an additional anti-slip element.

In another solution known from the European application with publication number EP 1 435 411, a solution was presented in the form of a non-slip structure of metal sheet, that includes a metal plate and a series of protruding bulges to prevent slipping. Structures of this kind may be applied, for example, in mechanical equipment, in equipment of housing facilities, as well as in the commercial facilities, decks, corridors. Metal plate is made from stainless steel or from other equivalent material. Non-slip bulges are produced in the shearing process. Each non-slip bulge has the inclination of 45° in relation to the metal plate. Both sides of the bulge are symmetrically arched; they have a form of a leaf with a flat surface.

In the further solution, known from the application description of the Korean invention according to KR20120134899, a mat was presented for a vehicle, with a top and a bottom layer. The mat has numerous upper holes. The mat has the top surface made from carbon and the bottom layer made from flexible material. Non-slip bulges are formed on the bottom surface of the bottom mat.

Another known solution is presented in the invention application description with the number WO 2004/022385, concerning a car mat with fibre-optic lighting. The mat is composed of three layers and one electrode, made from various materials and glued together by means of a hot-melt adhesive. The top layer can be made from textile materials or pressed from aluminium, also including many forms that prevent feet from slipping. The interlayer acts as a supplementation and it is made from plastic. The bottom surface of the interlayer forms the basis for fastening fibre optic cables. The invention concerns a car mat with fibre-optic lighting. According to the invention, the mat has three layers and illuminated lining in the area of passenger's heel, made from different materials and glued together with a holt-melt adhesive. In addition, the mat can be sewn by machine along its edges. The top layer can be made from textile materials or pressed from aluminium with a pattern covering many forms, that help to prevent feet from slipping. Moreover, the top layer also includes a layer with a thickness of 0,5 mm from rubber or aluminium, situated in the area, where the driver's legs rest during travel. The interlayer is a supplementing lining and it is made of plastic - EVA. The bottom surface of the interlayer forms a basis for fastening of fibre-optic cables, and the ends of conductors go through the holes, that are located in the above mentioned interlayer. The number of light points in the mat is specified by the demanded project, e.g. anagram, picture of a flag or a drawing.

The object of the invention is to draw up the structure of a car mat that meets strict requirements in the scope of strength, resistance to wear and tear, carrying off and accumulation of water, as well as easy cleaning, posed to equipment aimed for use, in particular, in all-terrain or sports cars.

According to the invention, the car mat is basically a three-layered structure, with a top layer made of a semi-rigid plate with water outlet holes. The respective layers of the three-layered structure are combined into one set, whose outside shape corresponds to the shape of a car mat aimed for passenger's feet.

According to the invention, the car mat is characterized with the fact, that the interlayer is a semi-rigid outlet structure, whereas the bottom layer is a semi-rigid plate.

In the solution according to the invention, the car mat has all three layers combined into one structure in a favourable way, through the outside edges of the bottom layer led to the top. These outside edges of the bottom layer in this execution cover the interlayer and the top layer, thus combining all three layers into one set.

All three layers can be connected in a different example, on the edges, into one structure, by means of side profiles. The side profiles, e.g. with a channel section, in this realization, cover the side edges of all three layers put together to form one set, and this is a tight connection.

The top layer, as mentioned above, has water outlet holes. These holes can be in the form of perforation of the mentioned top layer, known for person skilled in the art.

The above mentioned water outlet holes can be placed in profiled cavities of the top layer, to facilitate accumulation of water and carrying it off from the surface of the top layer to the interlayer of the car mat, according to the invention.

According to the invention, the bottom layer is used for accumulation of water and it protects from water infiltration in the car floor covering. To this end, the bottom layer of the mat, according to the invention, may have a cavity aimed for accumulation of water.

In order to facilitate accumulation of water in the formed cavity, the bottom layer may have a system of canals connected with the above mentioned cavity for water accumulation.

In the solution according to the invention, the respective layers of the mat can be done of metal. It is of great importance, especially in all-terrain cars, due to faster wear and tear of mats made of different materials in this type of vehicles.

In the favourable version of the solution according to the invention, the respective layers of the mat can be done of aluminium.

In another favourable solution, the respective layers of the mat can be made of plastic.

As a favourable version of plastic, one may use the material called carbon. In this patent description, carbon should be understood as one or more layers of fabric from carbon fibre, saturated with setting epoxy resin. This kind of material in the form of composite laminates is widely used in automotive industry, for example for production of car body elements.

The interlayer of the mat according to the invention, in the favourable version of the invention, may include a system of canals. To this end, the interlayer can be a set of sections combined hydraulically with the cavity for water accumulation. The notion of hydraulic connection should be understood in such a way that the canals are shaped, so that water accumulated in the respective canals of the interlayer may flow freely in the interlayer to the cavity aimed for water accumulation.

In order to manufacture a uniform mat according to the invention, all three layers of the mat can be combined between the edges into one structure with additional clips. The notion "between the edges" should be understood in such a way, that the additional clips may be placed on the surface of the mat, so that also flat areas and not only the edges of the mat can be combined, in order to maintain mat cohesion on the entire surface.

The car mat according to the invention may be equipped on the surface of the top layer with a decorative layer with water outlet holes.

The car mat according to the invention is a combination of two semi-rigid outside layers, the top and the bottom one, with an interlayer separating them, and this interlayer can also be semi-rigid. The top and bottom layer, as well as the interlayer, are made of aluminium plate, or from another metal, or from carbon plate. In this way, substantial resistance to wear and tear was obtained, as compared to mats from other materials, and also as compared to those made of flexible materials. At the same time, the holes in the top plate, the system of canals in the interlayer and a tight bottom plate with a cavity for water accumulation, allow for efficient protection of car floor covering against flooding, which is of particular importance in all-terrain and sports cars, often used in tough terrain conditions. Due to the material from which it was made, the mat is very easy to clean and, what is equally important, it does not require replacement with the onset of autumn and winter season. In the present invention solves the problem of water accumulation in the car floor mat.

The object of invention is presented in the example executions in the attached figures, and the respective figures present as follows:
Fig. 1 - view of three layers of the mat.
Fig. 2 - view of mat layers with indicated functions of each layer.
Fig. 3a, 3b, 3c - mat layers in the first embodiment.
Fig. 4a, 4b, 4c - mat layers in the second embodiment.
Fig. 5a, 5b, 5c - mat layers in the third embodiment.
Fig. 6a, 6b, 6c - mat layers in the fourth embodiment.
Fig. 7a, 7b, 7c - mat layers in the fifth embodiment.

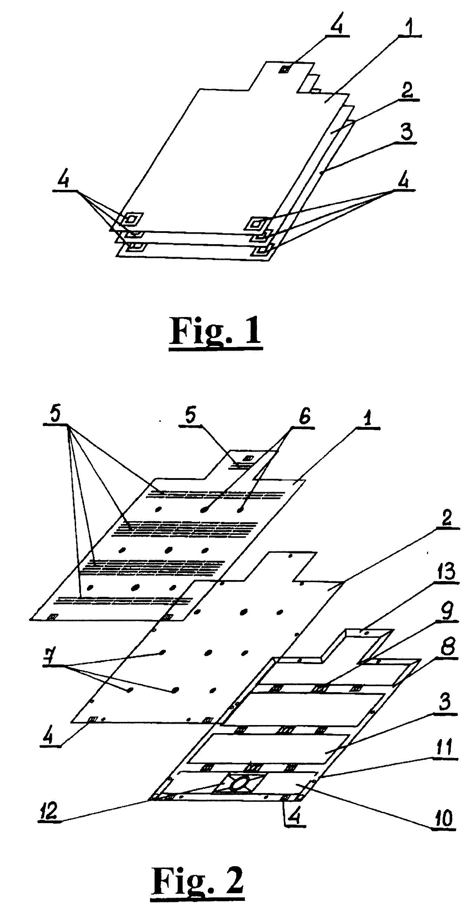

Fig. 1 is a schematic presentation of the arrangement of three layers of a car mat, slightly spaced from one another, in order to show their arrangement. The top layer 1 is separated from the bottom layer 3 with the interlayer 2. For the sake of better presentation of the arrangement of layers, this figure does not illustrate the elements that combine the layers 1,2,3 on the edges. The respective layers 1,2,3 are not bonded with one another with an agent with the characteristics of an adhesive, in order to facilitate water flow from the top layer 1 to the bottom layer 3. In this example execution the layers 1,2,3 have holes 4 in their corners, aimed at stabilization of the composite mat on the car floor.

Fig. 2 shows the same layers 1,2,3 in the more detailed view, with schematic indication of the elements, that are decisive for the function served by each of the layers that form the mat. The top layer 1 has five non-slip embossed zones 5 and nine water inlets 6. Water inlets 6 can be equipped with sieves. The interlayer 2 has nine water collection holes 7. The bottom layer 3 is limited with closed profiles 8 with inlet holes 9 to these profiles 8. The inlet holes 9 are coaxial with sieved inlets 6 in the top layer 1 and with collection holes 7 in the interlayer 2. In this embodiment, closed profiles 8 form a system of canals where water is collected, brought onto the mat by a driver or a passenger of the car. By this system of canals water is carried off with the holes 11 to the formed cavity 10 in the bottom layer 3. In this cavity 10 in this embodiment a drain plug 12 is located, allowing for draining accumulated water from the cavity 10. In other embodiments a different system of drainage of the bottom plate 3 can be used. In this embodiment the profiles 13 are not flow-through closed profiles.

### Example I

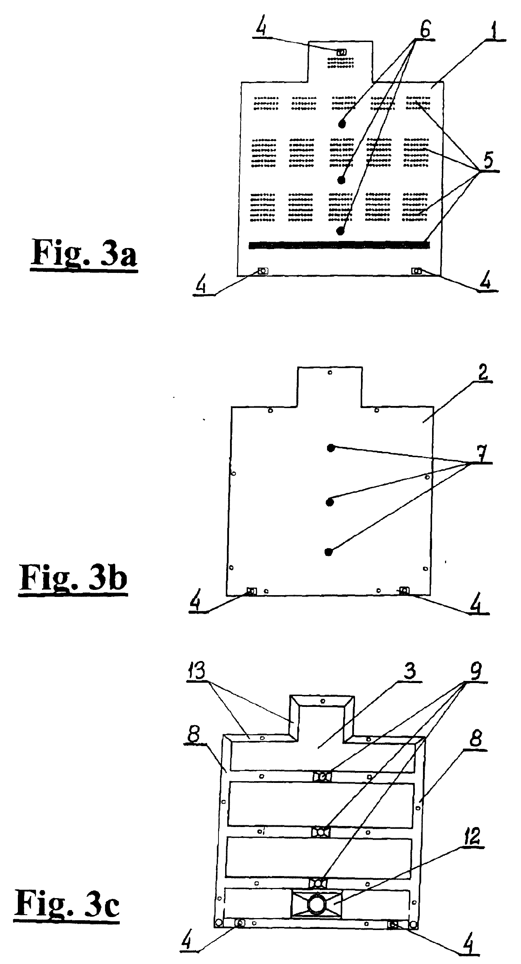

Fig. 3a, 3b, 3c illustrate the first embodiment of the car mat according to the invention; these figures illustrate each layer 1,2,3 in a separate view. In this embodiment the top layer 1 has 17 embossed zones 5 and three water inlets 6. Located coaxially to these water inlets 6, in the interlayer 2 there are three collection holes 7, and in the bottom layer 3 there are three inlet holes 9 and two holes 11 in the closed profile 8. Other functional elements of the respective layers 1,2,3 conform to the elements shown in fig. 2.

### Example II

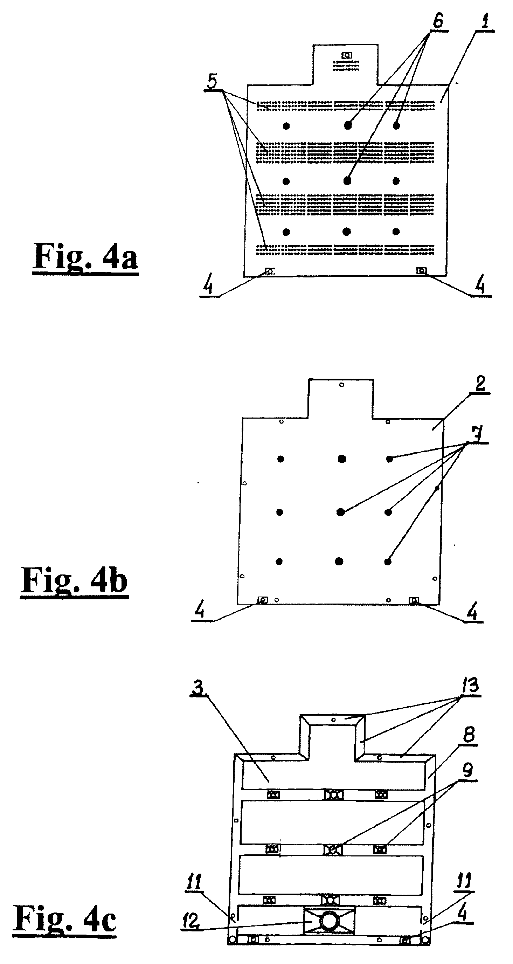

The second embodiment of the car mat according to the invention was shown earlier in fig. 2. This example execution is illustrated in greater detail in fig. 4a, 4b, 4c.

### Example III

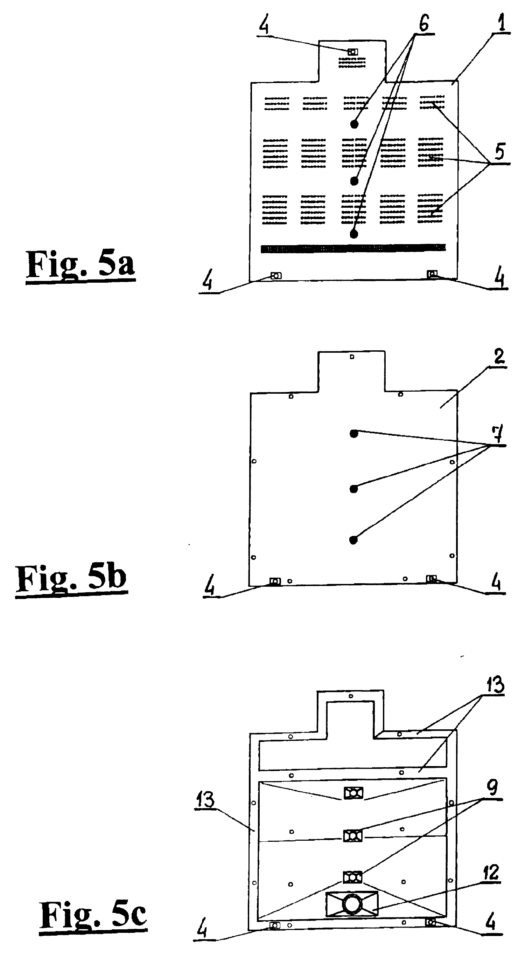

The third embodiment of the car mat according to the invention is illustrated in fig. 5a, 5b, 5c. This embodiment is similar to the first embodiment illustrated in fig. 3a, 3b, 3c. However, this embodiment is characterized with a different structure of the layer 3 shown in fig. 5c. The layer 3 in this example is a kind of basin with embossing that directs water from the collection holes 7 in the interlayer to the inlet holes 9, which in this embodiment are combined with the surface of the bottom layer 3 that forms a basin with a drain plug 12. The bottom layer is limited in this embodiment with closed profiles that are not flow-through closed profiles 13.

### Example IV

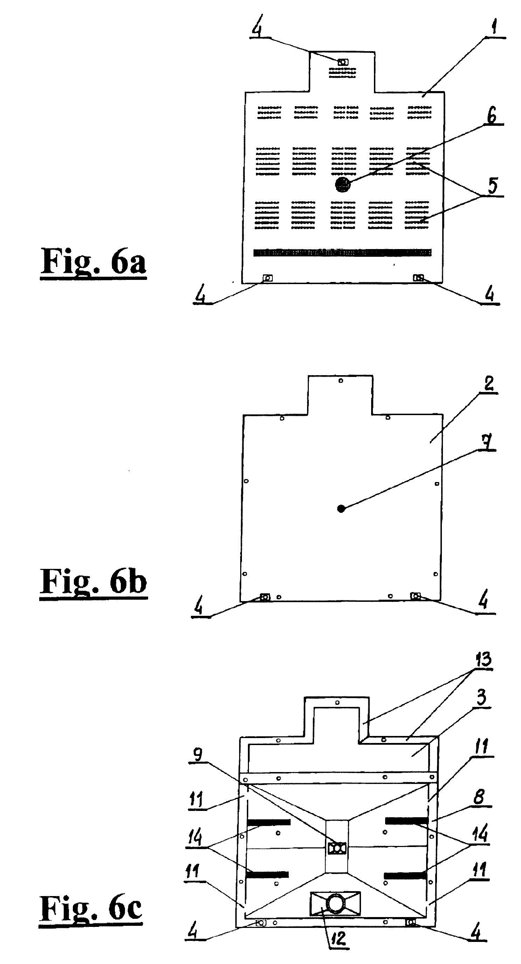

In the fourth embodiment shown in fig. 6a, 6b, 6c a substantial difference in relation to the first and the third example, is only one hole 4 situated in the top layer 1. Located coaxially to this hole 4, in the interlayer 2 there is only one collection hole 7, and in the bottom layer 3 there is one inlet hole 9. As opposed to the third example, in this example execution in the bottom layer 3 there is only one outlet hole 9, and between the interlayer 2 and the bottom layer 3 there are additional spacer reinforcements 14.

### Example V

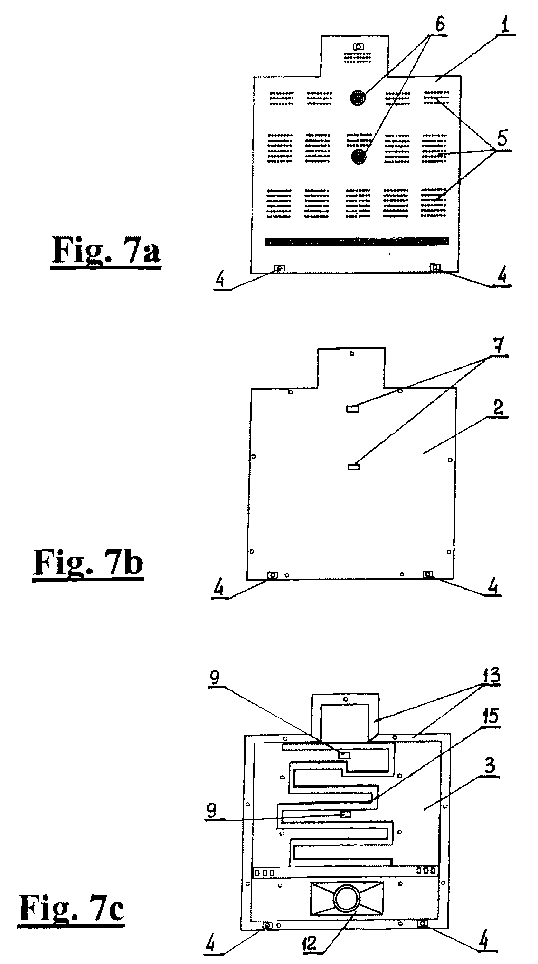

Fig. 7a, 7b, 7c show the car mat according to the invention in the fifth embodiment. The layers 1 and 2 differ from the solutions according to the previous embodiments with the fact, that in each of the layers 1,2 there are two holes, 6,7 respectively. What is the substantial difference in the bottom layer 3 is the labyrinth 15 composed of sections, whose arrangement can be different in other embodiments, and whose function is to ease the flow of water collected in the basin of the bottom layer 3 when the car is driven. In this embodiment terminal shapes on the edges of the bottom layer 3 are the shapes that are not flow-through closed profiles 13.

As indicated above, the car mat is a three-layered structure, where the top layer 1 is a semi-rigid plate with water outlet holes. The respective layers 1,2,3 of the three-layered structure are combined into one set, whose shape corresponds to the shape of a car mat, aimed for the passenger's feet.

In the solution according to the invention, the car mat has all its three layers 1,2,3 combined into one structure in a favourable way, by means of the outside edges of the bottom layer led to the top 3. These outside edges of the bottom layer 3 in this solution cover the edges of interlayer 2 and the top layer 3, thus combining all three layers 1,2,3 into one set. This is not shown in the figures, since this kind of connection of three layers is known to an expert in this field.

All three layers 1,2,3 can be combined in a different execution, on the edges, into one structure with the mediation of side profiles. The side profiles, for example with a channel section, in this execution, cover the side edges of all three layers 1,2,3 combined into one set, and this connection is tight, preventing water from escaping from the bottom layer to the outside, that is to the car floor covering. This kind of known solution of connection of the three layers 1,2,3 is not shown in the figures, since it is generally known by the person skilled in the art.

The car mat according to the invention in different embodiments, may be equipped on the surface of the top layer 1 with a decorative layer with holes, that allow for water draining through the layer 1 and 2 to the layer 3, whose task is to accumulate water gathering in the car. In order to drain collected water, the mat according to the invention is taken outside and accumulated water is poured out. This activity is made easy due to the fact, that all the elements of the mat according to the invention are made of metal or plastic, that do not absorb water.

The presented embodiments of the invention do not limit the options of other example solutions of the car mat according to the invention. For example, the mat according to the invention may have a wedge-shaped cross-section, with a vertical plane parallel to the longitudinal axis of the car. The mat in this embodiment may be ca. 3 mm thick in the area of the front edge and 1 cm to 3 cm thick in the area of the rear edge. This shaping favours formation of the above described cavity or a tank in the region of the rear edge, for water that accumulates inside the vehicle.

### List of designations in the drawings

1. Top layer.
2. Interlayer.
3. Bottom layer.
4. Hole.
5. Embossed zone.
6. Water inlet.
7. Collection hole.
8. Closed profile.
9. Inlet hole.
10. Cavity.
11. Hole.
12. Drain plug.
13. Non flow-through closed profile.
14. Spacer reinforcement.
15. Labyrinth.

## Claims

1. A car mat in the form of a three-layered structure, where the top layer is a semi-rigid plate with water outlet holes, and the respective layers of this three-layered structure are combined into one set, whose outside shape corresponds to the shape of a car mat, **characterised in that** the interlayer (2) is a semi-rigid outlet structure, whereas the bottom layer (3) is a semi-rigid plate.

2. A car mat according to the claim 1, **characterised in that** all three layers (1,2,3) are combined into one structure by the edges of the bottom layer (3) curved to the top, covering the edges of the remaining two layers (1,2).

3. A car mat according to the claim 1, **characterised in that** all three layers (1,2,3) are combined on the edges into one structure by means of side profiles.

4. A car mat according to the claim 1, **characterised in that** the water outlet holes are in the form of perforation of the top layer.

5. A car mat according to the claim 1 or 4, **characterised in that** the water outlet holes (6) are placed in profiled cavities of the top layer (1).

6. A car mat according to the claim 1, **characterised in that** the bottom layer (3) has a formed cavity (10) for water accumulation.

7. A car mat according to the claim 6, **characterised in that** the bottom layer (3) has a system of canals (8) connected with the cavity (10) for water collection.

8. A car mat according to one of the claims from 1 to 7, **characterised in that** the respective layers (1,2,3) are made of metal.

9. A car mat according to one of the claims from 1 to 7, **characterised in that** the respective layers (1,2,3) are made of aluminium.

10. A car mat according to one of the claims from 1 to 7, **characterised in that** the respective layers (1,2,3) are made of plastic.

11. A car mat according to one of the preceding claims from 1 to 7, **characterised in that** the respective layers (1,2,3) are made of carbon.

12. A car mat according to the claim 1,2 or 3, **characterised in that** all three layers (1,2,3) are combined into one structure with additional clips.

13. A car mat according to one of the claims from 1 to 4, **characterised in that** the top layer (1) is equipped with a decorative layer with water outlet holes.
